# EUROPEAN PATENT SPECIFICATION

(11) **EP 4 164 047 B1**
(45) Date of publication and mention of the grant of the patent: **29.10.2025**
(21) Application number: 22820571.2
(22) Date of filing: 09.06.2022
(51) Int. Cl.: H01M 50/519, H01M 50/569, H01M 50/211, H01M 10/48

(54) **BATTERY MODULE INCLUDING SENSING UNIT IN BENT FORM AND ELECTRONIC DEVICE INCLUDING SAME**
BATTERIEMODUL MIT SENSOREINHEIT IN GEBOGENER FORM UND ELEKTRONISCHE VORRICHTUNG DAMIT
MODULE DE BATTERIE COMPRENANT UNE UNITÉ DE DÉTECTION SOUS FORME COURBÉE ET DISPOSITIF ÉLECTRONIQUE LE COMPRENANT

(30) Priority: 09.06.2021 KR 20210074882
(43) Date of publication of application: 12.04.2023
(73) Proprietor: LG Energy Solution, Ltd., Seoul 07335 (KR)
(72) Inventor: AN, Hyuk, Daejeon 34122 (KR); YIM, Sang Wook, Daejeon 34122 (KR); KIM, Tae Geun, Daejeon 34122 (KR); CHOI, Jong Hwa, Daejeon 34122 (KR); LEE, Hyoung Suk, Daejeon 34122 (KR); YOON, Young Il, Daejeon 34122 (KR)
(74) Representative: Hoffmann Eitle
(86) International application number: PCT/KR2022/008109
(87) International publication number: WO 2022/260444

(56) References cited:
- WO-A1-2020/138869
- WO-A1-2022/092730
- KR-A- 20200 084 450
- KR-A- 20200 104 614
- KR-B1- 102 022 590
- KR-B1- 102 047 480
- KR-U- 20150 002 155
- US-A1- 2016 197 381

## Description

### [Technical Field]

The present invention relates to a battery module including a bent sensing unit and an electronic device including the same. More particularly, the present invention relates to a battery module including a sensing unit bent so as to be attached to a front surface and a rear surface of a housing and an electronic device including the same.

### [Background Art]

A lithium secondary battery usable as a high-energy-density, high-output energy source has been applied to medium- or large-sized products, such as an electric vehicle, a hybrid electric vehicle, or an energy storage system, as well as small-sized products, such as a portable device.

The lithium secondary battery has also attracted attention as an environmentally friendly energy source, since the lithium secondary battery is capable of remarkably reducing the use of fossil fuels, which were used as conventional energy sources, and generates no byproducts when the lithium secondary battery is used.

In order to apply the lithium secondary battery to the medium- or large-sized products, necessity for a large-capacity, high-output structure has increased. Accordingly, a plurality of lithium secondary batteries may be connected to each other in parallel and/or in series to constitute a battery module, and other structural elements may be added to one or more battery modules to constitute a battery pack.

The number of battery cells included in the battery module and the number of battery modules included in the battery pack may be set depending on output voltage and capacity required by a device in which the battery module or the battery pack is mounted.

When an energy source including a lithium secondary battery is used, shortening of charging time as well as an increase in capacity of a battery module have become a major issue in order to improve user convenience.

When fast charging is performed, however, heat is generated in the battery module, which is directly connected to safety. As a solution thereto, a structure in which the width of an electrode lead is increased may be presented as an alternative.

In a conventional battery module, however, a flexible printed circuit board (FPCB) configured to measure the voltage, current, and temperature of battery cells is added to one surface of a housing, whereby there is a limitation in increasing the width of an electrode lead.

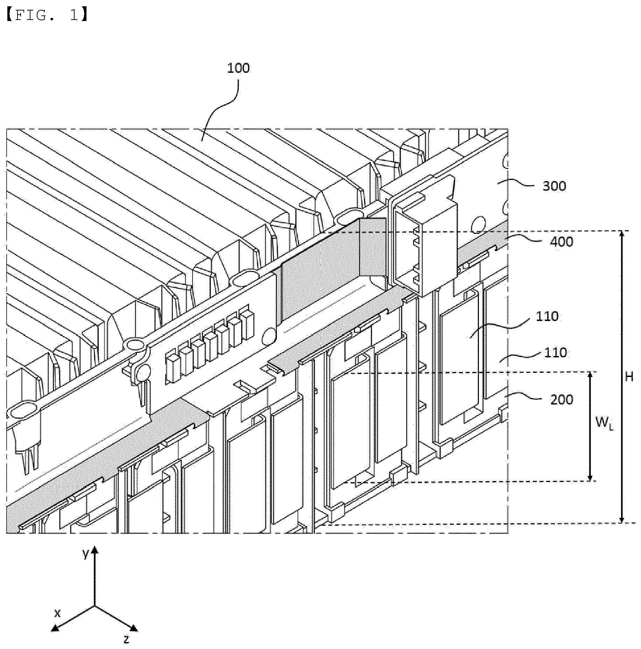

In connection therewith, FIG. 1 is a partial perspective view of a conventional battery module.

Referring to FIG. 1, electrode leads 110 protrude from one surface of a battery cell stack, in which a plurality of pouch-shaped battery cells 100 is arranged in tight contact with each other, and the electrode leads 110 are electrically connected to a busbar 200. The busbar 200 is attached and fixed to a housing 300, and a sensing unit 400, which is an FPCB, bent in a y-axis direction and a z-axis direction is added to an outer surface of the housing 300.

In the structure in which it is necessary to secure the space of the sensing unit 400 disposed so as to extend in the y-axis direction, as described above, the y-axis direction length of the electrode lead 110, i.e. the width (W_{L}) direction size of the electrode lead, is less than 50% of the height H of the housing, and it is difficult to increase the width of the electrode lead. When the width of the electrode lead is decreased, a temperature increase rate may increase, and therefore it is difficult to solve a problem in that heat is generated in the battery module during fast charging.

As a method of solving generation of heat in the battery module, Patent Document 1 discloses a battery module having a structure in which a thermally conductive adhesive is uniformly applied to the entirety of an upper side of a battery cell assembly, wherein cooling is performed through an upper side of the battery cell assembly as well as the lower side of the battery cell assembly.

Patent Document 1 discloses the structure in which the thermally conductive adhesive is applied in order to improve cooing performance of the battery module, but does not disclose a structure capable of increasing the width of an electrode lead as an alternative for reducing heat generated during fast charging.

Therefore, there is a necessity for a battery module having a structure capable of increasing the width of an electrode lead in order to reduce heat generation encountered during fast charging of the battery module.

### (Prior Art Document)

(Patent Document 1) Korean Registered Patent Publication No. 10-2150679 (2020.09.01)

US 2016/0197381 A1 concerns a battery pack. A battery stack, constituting a battery pack, is composed of a plurality of battery cells stacked one on top of the other. Electrode leads are fixed to terminal blocks that are mounted on a voltage monitoring board. The voltage monitoring board is fixed to a case body so as to close the opening of the case body. A voltage monitoring circuit is mounted on the voltage monitoring board.

WO 2020/138869 A1 concerns a battery module having a connector mounted on FPCB. The battery module includes a cell stack formed by stacking a plurality of battery cells; a busbar frame assembly comprising a busbar frame and a plurality of busbars fixed on the busbar frame so as to be electrically connected to the battery cells; and an FPCB assembly.

### [Disclosure]

### [Technical Problem]

The present invention has been made in view of the above problems, and it is an object of the present invention to provide a battery module including a bent sensing unit configured such that heat generated in a battery cell is reduced using an electrode lead having a large width and an electronic device including the same.

### [Technical Solution]

A battery module according to the present invention to accomplish the above object is defined in claim 1 and includes a battery cell stack including stacked pouch-shaped battery cells, a busbar coupled to an electrode lead of each of the pouch-shaped battery cells, a housing configured to fix the busbar, and a sensing unit disposed at the housing, wherein the sensing unit is attached to a first surface of the housing that faces the battery cell stack and the sensing unit is attached to a second surface of the housing, wherein the second surface of the housing is an outer surface opposite to the first surface of the housing.

The sensing unit is configured to wrap around an outer periphery of one side of the housing.

The sensing unit may be electrically connected to the busbar at the second surface of the housing.

The width of the electrode lead may be 50% to 80% of the height of the housing.

The width of the electrode lead may be 60% to 80% of the overall width of the pouch-shaped battery cell.

The sensing unit may be a FPCB.

A terminal connector may be coupled to a portion attached to the second surface of the housing as a part of the sensing unit.

The terminal connector may be attached to the sensing unit such that a width direction of the terminal connector is identical to a width direction of the housing.

In addition, the present invention provides an electronic device, which is defined in claim 8, including the battery module as an energy source.

In addition, the present invention may provide possible combinations of the above solving means.

### [Advantageous Effects]

As is apparent from the above description, in the present invention, an electrode lead having a large size compared to the size of an electrode is used, whereby it is possible to remarkably reduce a heat generation phenomenon encountered during fast charging.

In addition, a terminal connector is coupled to a sensing unit in the state in which a width direction of the terminal connector is identical to a width direction of a housing, whereby it is possible to secure a large width of the electrode lead.

In addition, the sensing unit is bent such that the sensing unit is attached so as to be disposed at opposite surfaces of the housing, whereby it is possible to secure a large size of the sensing unit. Consequently, it is possible to sense the state of a large number of battery cells.

As described above, the present invention proposes a structure capable of increasing the width of the electrode lead while sensing a large number of battery cells, whereby it is possible to prevent a decrease in lifespan and output of a battery module due to a heat generation phenomenon encountered during fast charging.

### [Description of Drawings]

FIG. 1 is a partial perspective view of a conventional battery module.
FIG. 2 is a partial perspective view of a battery module according to the present invention.
FIG. 3 is a partial enlarged view of FIG. 2.
FIG. 4 is a partial enlarged view of the battery module of FIG. 3 when viewed in an inward direction.
FIG. 5 is a plan view of an electrode assembly having an electrode lead connected to an electrode tab thereof.
FIG. 6 is a plan view of a pouch-shaped battery cell.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Hereinafter, embodiments of the present invention will be described in detail with reference to the accompanying drawings.

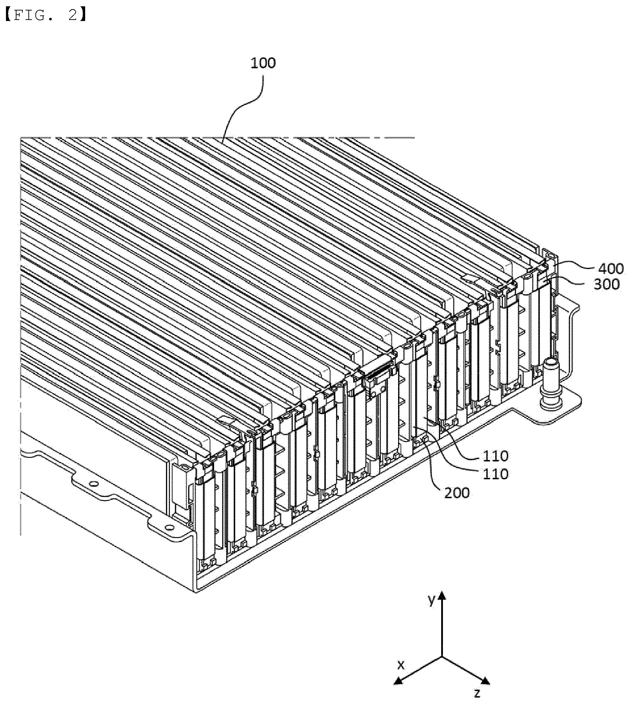

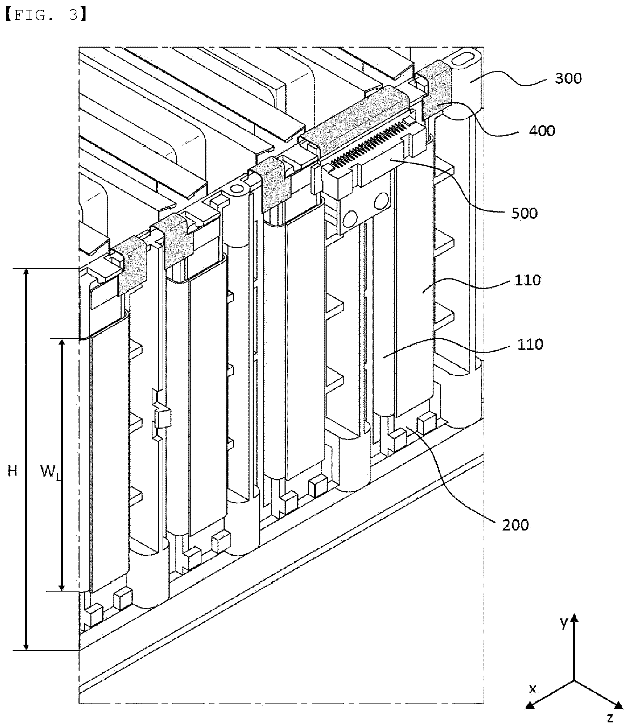

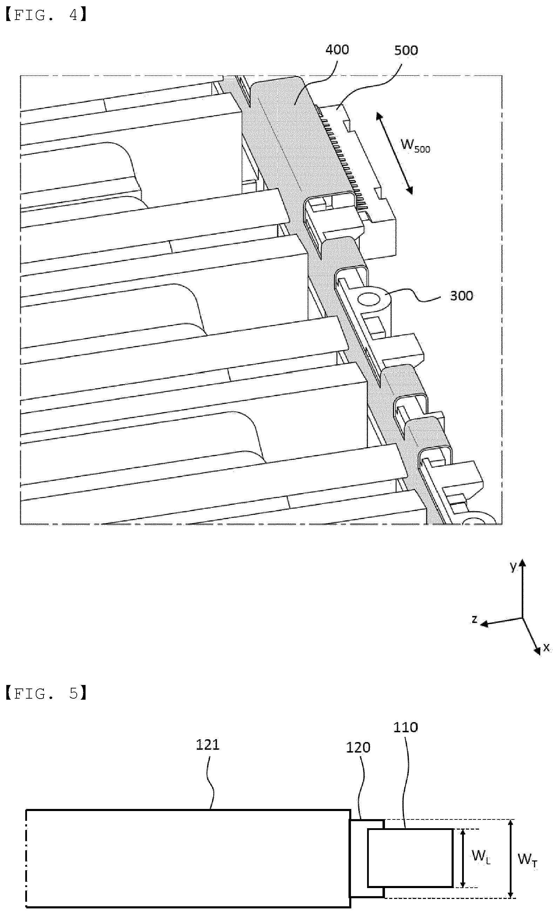

FIG. 2 is a partial perspective view of a battery module according to the present invention, FIG. 3 is a partial enlarged view of FIG. 2, and FIG. 4 is a partial enlarged view of the battery module of FIG. 3 when viewed in an inward direction.

Referring to FIGS. 2 to 4, the battery module according to the present invention includes a battery cell stack constituted by a plurality of pouch-shaped battery cells 100 stacked in an x-axis direction, a busbar 200 electrically coupled to electrode leads 110 protruding from the pouch-shaped battery cells 100, a housing 300 configured to fix the busbar 200, and a sensing unit 400 disposed at the housing.

The housing 300 includes a first surface that faces the battery cell stack and a second surface, which is an outer surface opposite to the first surface, and the sensing unit 400 is bent so as to be attached to the first surface and the second surface.

Specifically, the sensing unit 400 is configured to wrap around an outer periphery of one side of the housing 300. For example, in FIGS. 2 to 4, the sensing unit is attached so as to wrap an outer periphery of a y-axis direction end of the housing 300.

When compared to the structure in which the sensing unit is arranged only at the second surface in the y-axis direction in the conventional battery module shown in FIG. 1, the y-axis direction length of the sensing unit may be reduced by about 50%. Consequently, the y-axis direction length of the electrode lead, i.e. the width W_{L} of the electrode lead, may be increased in proportion to a decrease in y-axis direction length of the sensing unit.

When considering the fact that the pouch-shaped battery cell has a structure in which the width of the electrode lead is maximized, the pouch-shaped battery cell may be a bidirectional battery cell configured such that a positive electrode lead and a negative electrode lead protrude in opposite directions. The electrode leads are bent so as to be coupled to the busbar in a state of extending to the outside through slits formed in the busbar.

FIG. 1 shows that the positive electrode lead and the negative electrode lead are coupled to the busbar so as not to overlap each other, and FIG. 2 shows that the positive electrode lead and the negative electrode lead are coupled to the busbar in a state of being disposed so as to overlap each other.

That is, the electrode leads may be coupled to the busbar in various manners.

The sensing unit 400 may be an FPCB configured such that a circuit is printed on an electrically insulative board, and the FPCB, which is the sensing unit 400, may be electrically connected to the busbar 200 at the second surface of the housing so as to be connected to each of the plurality of pouch-shaped battery cells 100 constituting the battery module in order to sense the temperature, voltage, and current thereof.

The y-axis direction length of the electrode lead 110 according to the present invention, i.e. the width W_{L} of the electrode lead, is greater than that of the electrode lead in the conventional battery module. For example, the width W_{L} of the electrode lead may be 50% to 80% of the height H of the housing. Specifically, when the height H of the housing is 110 mm, an electrode lead having a width of 60 mm to 80 mm may be used. The width of the electrode lead may be increased by about 20% to 100%, compared to a conventional structure in which, when the height of the housing was 110 mm, an electrode lead having a width of 40 mm to 50 mm was used.

A terminal connector 500, as a connection portion configured to transmit data measured by the sensing unit of the battery module, may be attached to the sensing unit 400. In FIGS. 2 to 4, the structure in which the terminal connector 500 is coupled to the sensing unit 400 disposed at the second surface of the housing is shown. The terminal connector 500 is configured to have a structure in which the terminal connector extends so as to have a large length in one direction. In this structure, when the width (W₅₀₀) direction of the terminal connector in which the length of the terminal connector is large is disposed parallel to the y-axis direction, the width W_{L} of the electrode lead is reduced. Consequently, the terminal connector 500 is attached such that the width (W₅₀₀) direction of the terminal connector is the same as the x-axis direction, which is the width direction of the housing.

FIG. 5 is a plan view of an electrode assembly having an electrode lead connected to an electrode tab thereof.

Referring to FIG. 5, a plate-shaped electrode plate 121 having an electrode tab 120 protruding to the right is shown. Two or more electrode plates 121 may be stacked, and the number of electrode tabs 120 may be equal to the number of stacked electrode plates 121.

The electrode assembly may be a stacked and folded type electrode assembly, in which unit cells, each of which is constituted by a bi-cell or a monocell, are wound in a state of being disposed on a separator sheet, or a laminated and stacked type electrode assembly, in which the unit cells are stacked in the state in which a separator is interposed therebetween.

The bi-cell is configured to have a structure in which three electrode plates disposed such that adjacent electrodes have different polarities are stacked in the state in which separators are interposed therebetween, and the monocell is configured to have a structure in which two electrode plates having different polarities are stacked in the state in which a separator is interposed therebetween.

The width W_{T} of the electrode tab 120 protruding from the electrode plate 121 is greater than the width W_{L} of the electrode lead 110. In general, when considering the fact that the electrode tab 120 further extends by 5 mm from the electrode lead 110 in the width direction, the width of the electrode tab may be increased so as to correspond to the structure in which the width of the electrode lead is increased.

For example, when the width W_{L} of the electrode lead 110 is 60 mm to 80 mm, the width W_{T} of the electrode tab 120 may be 70 mm to 90 mm.

That is, in the pouch-shaped battery cell used in the present invention, an electrode tab having a size greater than the size of an electrode tab of a conventional electrode assembly is used. The electrode tab is coupled to an electrode lead having an increased width, whereby it is possible to reduce a heat generation phenomenon encountered during fast charging.

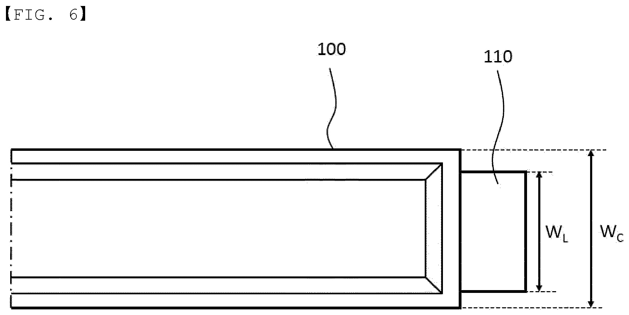

FIG. 6 is a plan view of a pouch-shaped battery cell.

Referring to FIG. 6, a pouch-shaped battery cell 100 configured to have a structure in which an electrode assembly is received in a pouch-shaped battery case and an electrode lead 110 protrudes to the right in the figure is shown.

In the pouch-shaped battery cell 100, the width W_{L} of the electrode lead may be 60% to 80% of the overall width W_{C} of the pouch-shaped battery cell 100. Specifically, when the overall width W_{C} of the battery cell is 100 mm, an electrode lead having a width of 60 mm to 80 mm may be used. That is, the width of the electrode lead may be increased by about 20% to 100%, compared to a conventional structure in which, when the overall width W_{C} of the battery cell was 100 mm, an electrode lead having a width of 40 mm to 50 mm was used.

In the present invention, as described above, the bent sensing unit may be attached, and the terminal connector may be disposed in the same direction as the width direction of the housing, whereby it is possible to increase the width of the electrode lead. Consequently, it is possible to minimize a heat generation phenomenon of the battery cell during fast charging, whereby it is possible to improve performance of the battery cell.

The present invention provides an electronic device including the battery module as an energy source.

The electronic device may be an electric vehicle, a hybrid electric vehicle, an electric bicycle, an electric cart, or an energy storage system, the detailed structure of which will omitted, since the electronic device may be configured to have a known structure.

Those skilled in the art to which the present invention pertains will appreciate that various applications and modifications are possible within the scope of the appended claims.

### (Description of Reference Symbols)

100: Pouch-shaped battery cell
110: Electrode lead
120: Electrode tab
121: Electrode plate
200: Busbar
300: Housing
400: Sensing unit
500: Terminal connector
H: Height of housing
W_{C} : Overall width of pouch-shaped battery cell
W_{L} : Width of electrode lead
W_{T} : Width of electrode tab
W₅₀₀ : Width of terminal connector

## Claims

1. A battery module comprising:
a battery cell stack including stacked pouch-shaped battery cells (100);
a busbar (200) coupled to an electrode lead (110) of each of the pouch-shaped battery cells (100);
a housing (300) configured to fix the busbar (200); and
a sensing unit (400) disposed at the housing (300), wherein
the sensing unit (400) is attached to a first surface of the housing (300) that faces the battery cell stack and the sensing unit (400) is attached to a second surface of the housing (400), wherein the second surface of the housing (300) is an outer surface opposite to the first surface of the housing (300), wherein
the sensing unit (400) is configured to wrap around an outer periphery of one side of the housing (300).

2. The battery module according to claim 1, wherein the sensing unit (400) is electrically connected to the busbar (200) at the second surface of the housing (300).

3. The battery module according to claim 1, wherein a width (W_{L}) of the electrode lead (110) is 50% to 80% of a height (H) of the housing (300).

4. The battery module according to claim 1, wherein a width (W_{L}) of the electrode lead (110) is 60% to 80% of an overall width (W_{C}) of the pouch-shaped battery cell (100).

5. The battery module according to claim 1, wherein the sensing unit (400) is a FPCB.

6. The battery module according to claim 1, wherein a terminal connector (500) is coupled to a portion of the sensing unit (400) attached to the second surface of the housing (300).

7. The battery module according to claim 6, wherein the terminal connector (500) is attached to the sensing unit (400) such that a width direction (W₅₀₀) of the terminal connector (500) is identical to a width direction of the housing (300).

8. An electronic device comprising the battery module according to any one of claims 1 to 7 as an energy source.

## Patentansprüche

1. Batteriemodul, umfassend:
einen Batteriezellenstapel, der übereinander angeordneten beutelförmigen Batteriezellen (100) einschließt;
eine Sammelschiene (200), die mit einer Elektrodenleitung (110) jeder der beutelförmigen Batteriezellen (100) gekoppelt ist;
ein Gehäuse (300), das zum Befestigen der Sammelschiene (200) konfiguriert ist; und
eine am Gehäuse (300) angeordnete Sensoreinheit (400), wobei
die Sensoreinheit (400) an einer ersten Oberfläche des Gehäuses (300) angebracht ist, die dem Batteriezellenstapel zugewandt ist, und die Sensoreinheit (400) an einer zweiten Oberfläche des Gehäuses (400) angebracht ist, wobei die zweite Oberfläche des Gehäuses (300) eine äußere Oberfläche ist, die der ersten Oberfläche des Gehäuses (300) gegenüberliegt, wobei
die Sensoreinheit (400) so konfiguriert ist, dass sie sich um einen äußeren Umfang einer Seite des Gehäuses (300) herum wickelt.

2. Batteriemodul nach Anspruch 1, wobei die Sensoreinheit (400) an der zweiten Oberfläche des Gehäuses (300) elektrisch mit der Sammelschiene (200) verbunden ist.

3. Batteriemodul nach Anspruch 1, wobei eine Breite (W_{L}) der Elektrodenleitung (110) 50 % bis 80 % einer Höhe (H) des Gehäuses (300) beträgt.

4. Batteriemodul nach Anspruch 1, wobei eine Breite (W_{L}) der Elektrodenleitung (110) 60 % bis 80 % einer Gesamtbreite (W_{C}) der beutelartigen Batteriezelle (100) beträgt.

5. Batteriemodul nach Anspruch 1, wobei die Sensoreinheit (400) eine flexible Leiterplatte ist.

6. Batteriemodul nach Anspruch 1, wobei ein Anschlussverbinder (500) mit einem Abschnitt der Sensoreinheit (400) gekoppelt ist, der an der zweiten Oberfläche des Gehäuses (300) angebracht ist.

7. Batteriemodul nach Anspruch 6, wobei der Anschlussverbinder (500) so an der Sensoreinheit (400) angebracht ist, dass eine Breitenrichtung (W₅₀₀) des Anschlussverbinders (500) mit einer Breitenrichtung des Gehäuses (300) identisch ist.

8. Elektronische Vorrichtung, die das Batteriemodul nach einem der Ansprüche 1 bis 7 als Energiequelle umfasst.

## Revendications

1. Module de batterie comprenant :
un empilement d'éléments de batterie incluant des éléments de batterie en forme de poche (100) empilés ;
une barre omnibus (200) couplée à un fil d'électrode (110) de chacun des éléments de batterie en forme de poche (100) ;
un boîtier (300) configuré pour fixer la barre omnibus (200) ; et
une unité de détection (400) disposée au niveau du boîtier (300), dans lequel
l'unité de détection (400) est fixée à une première surface du boîtier (300) qui fait face à l'empilement d'éléments de batterie et l'unité de détection (400) est fixée à une seconde surface du boîtier (400), dans lequel la seconde surface du boîtier (300) est une surface externe opposée à la première surface du boîtier (300), dans lequel
l'unité de détection (400) est configurée pour s'enrouler autour d'une périphérie externe d'un côté du boîtier (300).

2. Module de batterie selon la revendication 1, dans lequel l'unité de détection (400) est connectée électriquement à la barre omnibus (200) au niveau de la seconde surface du boîtier (300).

3. Module de batterie selon la revendication 1, dans lequel une largeur (W_{L}) du fil d'électrode (110) est de 50 % à 80 % d'une hauteur (H) du boîtier (300).

4. Module de batterie selon la revendication 1, dans lequel une largeur (W_{L}) du fil d'électrode (110) est de 60 % à 80 % d'une largeur globale (W_{C}) de l'élément de batterie en forme de poche (100).

5. Module de batterie selon la revendication 1, dans lequel l'unité de détection (400) est une FPCB.

6. Module de batterie selon la revendication 1, dans lequel un connecteur de borne (500) est couplé à une partie de l'unité de détection (400) fixée à la seconde surface du boîtier (300).

7. Module de batterie selon la revendication 6, dans lequel le connecteur de borne (500) est fixé à l'unité de détection (400) de telle sorte qu'une direction de largeur (W₅₀₀) du connecteur de borne (500) est identique à une direction de largeur du boîtier (300).

8. Dispositif électronique comprenant le module de batterie selon l'une quelconque des revendications 1 à 7 en tant que source d'énergie.
